# EUROPEAN PATENT SPECIFICATION

(11) **EP 4 458 681 B1**
(45) Date of publication and mention of the grant of the patent: **25.03.2026**
(21) Application number: 23170961.9
(22) Date of filing: 02.05.2023
(51) Int. Cl.: B64D 37/30

(54) **ENERGY SUPPLY SYSTEM FOR AN AIRCRAFT**
ENERGIEVERSORGUNGSSYSTEM FÜR EIN FLUGZEUG
SYSTÈME D'ALIMENTATION EN ÉNERGIE POUR UN AÉRONEF

(43) Date of publication of application: 06.11.2024
(73) Proprietor: Airbus Operations GmbH, 21129 Hamburg (DE)
(72) Inventor: SCHULZE-REIMANN, Kai, 21129 Hamburg (DE)
(74) Representative: LKGLOBAL Partnerschaftsgesellschaft mbB

(56) References cited:
- WO-A1-2012/045028
- US-A1- 2014 174 083

## Description

### FIELD OF THE INVENTION

The present invention relates to powering an aircraft, more specifically the invention relates to an energy supply arrangement for an aircraft, an aircraft and a method for supplying energy to an aircraft.

### BACKGROUND OF THE INVENTION

Aircrafts may be powered by fluid energy carriers that are stored in a fluid supply system. Certain energy carriers, for example liquid gases, may be provided to warm up due to processing heat in normal operation procedures of the aircraft and heat ingress, e.g., for a parked aircraft. Consequently, a gas pressure may rise until it reaches an operational limit and excessive gas may then have to be vented overboard the aircraft to avoid overpressure in the fluid supply system. However, it has been that the vented gas not only means a loss of energy, but also requires measures to ensure that safety requirements are covered and a possible impact of the vented gas on the environment may need to be monitored.

US 2014/174083 A1 relates to a system including a detection unit, a boil-off auxiliary power unit, and a controller. The detection unit is configured to detect a characteristic of a boil-off gas stream from a cryotank configured to hold a cryogenic fluid. The boil-off auxiliary power unit is configured to receive the boil-off gas stream and use the boil-off gas stream to provide auxiliary power to a vehicle system. The controller is configured to acquire information from the detection unit corresponding to the characteristic; determine, using the information acquired from the detection unit, an available boil-off auxiliary energy that is available from the boil-off auxiliary power unit, determine a mode of operation of the vehicle system, determine a required auxiliary energy for the vehicle system; and to operate the auxiliary power unit based on the available boil-off auxiliary energy, the mode of operation, and the required auxiliary energy.

WO 2012/045028 A1 relates to a dual fuel propulsion system including a gas turbine engine capable of generating a propulsive thrust using a cryogenic liquid fuel. A method of operating an aircraft engine is disclosed using a selected proportion of a first fuel and a second fuel during selected portions of a flight profile to generate hot gases that drive a gas turbine engine.

### SUMMARY OF THE INVENTION

There may thus be a need for improving the energy supply for an aircraft in terms efficiency, safety and possible environmental effects.

The object of the present invention is solved by the subject-matter of the independent claims; further embodiments are incorporated in the dependent claims. It should be noted that the following described aspects of the invention apply also for the energy supply arrangement for the aircraft, the aircraft and the method for supplying energy to an aircraft.

According to the present invention, an energy supply arrangement for an aircraft is provided. The energy supply arrangement comprises a fluid supply system, a primary fluid consuming load and a secondary fluid consuming load. The fluid supply system is configured to provide a fluid fuel to the primary fluid consuming load and the secondary fluid consuming load. The fluid supply system comprises conduits and at least one supply connection configured for connecting to a fluid reservoir storing a fluid supply. The conduits are connecting the at least one supply connection with the primary fluid consuming load and the secondary fluid consuming load. The primary fluid consuming load and the secondary fuel consuming load are configured to provide an energy output for operating the aircraft. The primary fluid consuming load is configured to provide a main energy output for a flight operation mode of the aircraft. The primary fluid consuming load and the secondary fluid consuming load are configured to be independently operable from each other. The fluid fuel is present in a first state, forming a first state fuel, and in a second state, forming a second state fuel. The first state is a liquid, and the second state is gaseous. The secondary fuel consuming load is configured to operate with the second state fuel. The second state fuel results from a conversion of the first state fuel to the second state fuel generating a pressure in the fluid supply system; wherein the fluid supply system is configured to accumulate the second state fuel in order to supply the secondary fluid consuming load; wherein the secondary fluid consuming load is configured to be supplied with the second state fuel by the pressure in the fluid supply system; and wherein the conversion of the first state fuel to the second state fuel is caused by large surfaces with imperfections of the fluid supply system, including the large inner surface of the conduits supplying the primary fluid consuming load.

As an advantage, overboard venting of the second state fuel, e.g., hydrogen gas, is avoided by usefully converting the hydrogen gas to electricity inside the secondary consuming load, e.g., a local fuel cell system.

According to an example, the secondary fluid consuming load is configured to provide a secondary energy range 38 for operating the aircraft on ground. The primary fluid consuming load is configured to provide a primary energy range 40 for operating the aircraft during flight mission.

According to an example, the secondary fluid consuming load is configured to be arranged at an arbitrary site between the at least one supply connection and the primary fluid consuming load and/or the secondary fluid consuming load is configured to be arranged at the at least one supply connection.

According to an example, the fluid supply system is configured to provide hydrogen as the fluid fuel. The first state fuel comprises hydrogen in a liquid phase. The second state fuel comprises hydrogen in a gaseous phase. The fluid supply system is configured to supply the hydrogen at least as second state fuel.

According to an example, the secondary fuel consuming load is a fuel cell.

Another advantageous effect is that the energy needed is produced locally (weight saving) and is not sent forward (as hydrogen) to the propulsion system and afterwards back (as electrical energy).

According to the present invention, also an aircraft is provided. The aircraft comprises a cabin area, a cockpit arrangement, a propulsion system and an energy supply arrangement according to one of the previous examples. The primary fluid consuming load is configured to contribute to the propulsion system and the secondary fluid consuming load is configured to the energy supply of at least one of the group of the cabin area and the cockpit arrangement.

According to the present invention, also a method for supplying energy to an aircraft is provided. The method comprises the following steps:
- Providing a fluid fuel for an aircraft in a first state, forming a first state fuel, and in a second state, forming a second state fuel, the first state being liquid and the second state being gaseous;
- Providing a fluid supply for a primary fluid consuming load; and
- Supplying the second state fuel to a secondary fluid consuming load. The primary fluid consuming load and the secondary fuel consuming load are configured to provide an energy output for operating the aircraft. The primary fluid consuming load is configured to provide a main energy output for a flight operation mode of the aircraft, wherein the second state fuel results from a conversion of the first state fuel to the second state fuel generating a pressure in the fluid supply system, wherein the fluid supply system is configured to accumulate the second state fuel in order to supply the secondary fluid consuming load, wherein the secondary fluid consuming load is configured to be supplied with the second state fuel by the pressure in the fluid supply system, wherein the conversion of the first state fuel to the second state fuel is caused by large surfaces with imperfections of the fuel supply system, including the large inner surface of the conduits supplying the primary fluid consuming load.

According to an aspect, a local hydrogen conditioning system and a hydrogen-to-energy conversion system is provided that uses the vented / dumped hydrogen to produce electricity and or heat and avoids hydrogen vented overboard. The hydrogen conditioning system is a small version of a hydrogen conditioning system working for an aircraft propulsion, but with reduced complexity and weight due to much lower mass flow. It comprises a heat exchanger. The heat could either come from the cooling need in the cabin (supplemental cooling system) or from waste heat from the local fuel cell or the gas heater. If technically possible, the cryogenic hydrogen could also be burned with a cryogenic flame. The energy conversion (fuel cell or gas heater) could serve the local cabin for heating need and power supply or could power directly the tank systems components and controller.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of an energy supply arrangement for an aircraft.
Fig. 2 schematically shows a more detailed view on an example of an energy supply arrangement for an aircraft.
Fig. 3 schematically shows an example of an aircraft comprising the energy supply arrangement.
Fig. 4 shows basic steps of an example of a method for supplying energy to an aircraft.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

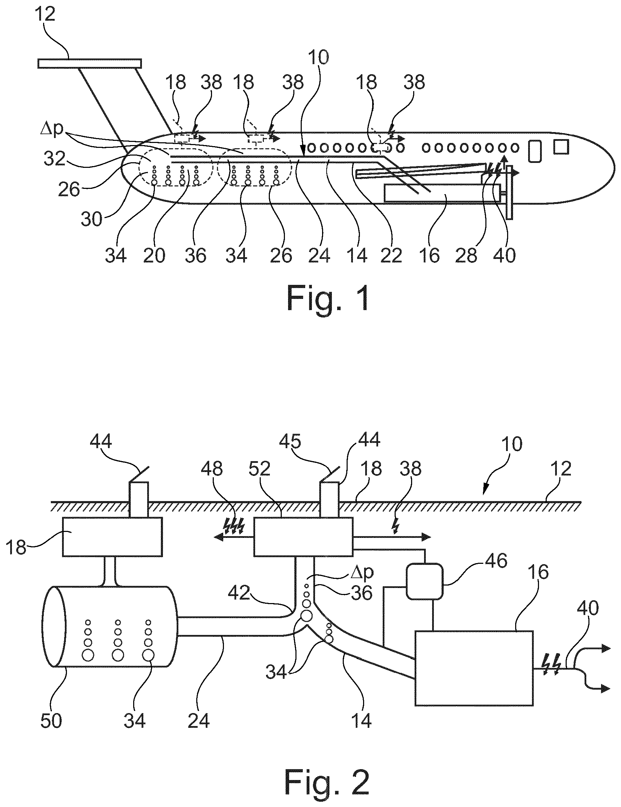

Fig. 1 schematically shows an example of an energy supply arrangement 10 for an aircraft 12. The energy supply arrangement 10 for an aircraft 12 comprises a fluid supply system 14, a primary fluid consuming load 16 and a secondary fluid consuming load 18. The fluid supply system 14 is configured to provide a fluid fuel 20 to the primary fluid consuming load 16 and the secondary fluid consuming load 18. The fluid supply system 14 comprises conduits 22 and at least one supply connection 24 configured for connecting to a fluid reservoir 26 storing a fluid supply. The conduits 22 are connecting the at least one supply connection 24 with the primary fluid consuming load 16 and the secondary fluid consuming load 18. The primary fluid consuming load 16 and the secondary fuel consuming load 18 are configured to provide an energy output for operating the aircraft 12. The primary fluid consuming load 16 is configured to provide a main energy output 28 for a flight operation mode of the aircraft 12. The primary fluid consuming load 16 and the secondary fluid consuming load 18 are configured to be independently operable from each other. The fluid fuel 20 is present in a first state, forming a first state fuel 30, and in a second state, forming a second state fuel 32. The first state is liquid, and the second state is gaseous. The secondary fuel consuming load 18 is configured to operate with the second state fuel 32.

In an option of Fig. 1, at least one primary fluid consuming load 16 and at least one secondary fluid consuming load 18 are provided.

The term "energy supply arrangement 10" relates to a system that can provide energy to any action or operation that consumes energy.

The term "fluid" relates to e. g. a liquid or gas that continuously deforms, i.e., flows, under an applied shear stress, or external force.

In an example, the fluid can be any substance carrying a form of energy.

In an example, the form of energy carried by the fluid can be chemical energy.

In an example, the fluid is convertable to a different state or fluid in the energy supply arrangement 10 of Fig. 1.

The term "consuming" relates to conversion, combustion, decay, and depletion.

In an example, the fluid releases energy, when being converted to a different fluid.

The term "load" relates to a unit that converts fluid to a different fluid to yield a loss in the overall amount of the fluid.

The term "primary fluid consuming load 16" relates to an operating equipment that converts the fuel to a different state of the fuel, thereby consuming the fuel and is able to convert, store and transmit the energy released by the conversion of the fuel to a different state.

The term "secondary fluid consuming load 18" and "primary fluid consuming load 16" can both be referred to as fluid consuming loads or as loads.

In an example, the primary fluid consuming load 16 provides more energy than the secondary fluid consuming load 18, while providing the main energy output 28.

In an example, the fluid consuming loads, shown in Fig. 1, are devices that can convert chemical energy carried by the fuel to electrical energy.

In an example of Fig. 1, a fluid consuming load is a device that carries out a chemical reaction between the fuel and another substance, being a reagent. The reaction between the fuel and the reagent involves transfer of electrons from the fuel to the reagent. The device is configured to mediate the electron transfer from the fuel to the reagent and prevents direct electron transfer from the fuel to the reagent, while it also prevents direct contact between the fuel and the reagent. The device permits exchange of the chemical reaction products from the fuel to the reagent. The whole process causes a closed electric current within the device. The electric current and the resulting voltage of the chemical reaction of the device generates electric power, for example the main energy output 28 in Fig. 1. The electric power can be supplied by the device, respectively the primary fluid consuming load 16 or secondary fluid consuming load 18 to all actions of the aircraft 12 requiring electric power.

In an example, the primary fluid consuming load 16 is a fuel cell.

The term "fluid fuel 20" relates to any substance carrying a form of releasable energy.

The term "fluid fuel 20" can also be referred to as gasoline, gas generant, propellant, combustible.

The term "fluid fuel 20" can also be referred to as fluid, fuel, fluid supply or substance.

In an example, the fuel comprises any known reducing agent.

In an example of Fig. 1, the fuel comprises hydrogen.

In an example, the fuel comprises hydrogen containing compounds.

In an example, the fuel comprises hydrocarbons.

The term "liquid hydrogen" can also be referred to as lH2.

In another example, not shown in Fig. 1, the primary fluid consuming load 16 is a device that permits direct reaction between the fuel and a reagent. The chemical energy is released in the form of thermal energy during the reaction between the fuel and the reagent. The device is configured to store and transmit the heating energy.

In another example, the consuming load is an engine or a turbine.

In another example, the chemical reaction leads to an expansion of the reaction volume. The primary fluid consuming load 16 converts the expansion of the reaction volume into mechanical energy.

The term "fluid supply system 14" relates to any tubing or pipeline system having a lumen capable of conducting the fuel or the fluid, as with the conduits 22 in Fig. 1. The fluid supply system 14 is able to provide a fluid dynamic connection between different tubing.

In an example, the fluid supply system 14 is adjusted to the properties of the fuel conducted by the fluid supply system 14.

In an example, the fluid supply system 14 is configured to store and conduct hydrogen in gaseous or liquid form.

In an example, the fluid supply system 14 comprises conduits 22 without any fluid reservoir 26, while the conduits 22 are storing the fuel.

In an example, the fluid supply system 14 is configured to store and conduct a fuel under cryogenic temperatures.

In an example, the fluid supply system 14 is configured to store and conduct a fuel under liquid hydrogen temperatures.

In an example, the fluid supply system 14 comprises hydrogen leak-tight conduits 22 and hydrogen leak-tight conduit connections.

In an example, the fluid supply system 14 possesses a thermal insulation.

In an example, the fluid supply system 14 spans the whole aircraft 12.

In an example, not shown in Fig.1, the fluid supply system 14 is connected to the structural parts of the aircraft 12.

The term "fluid reservoir 26" relates to a storing unit capable of storing a substance, such as a tank, a container, a vessel, a pressure vessel.

In an example of Fig. 1, also more than one fluid reservoir 26 is provided and connected to the fluid supply system 14. The fluid supply system 14 also is configured to be connected to more than one fluid reservoir 26.

In an example, the properties of the fluid reservoir 26 are adjusted to the properties of the fluid in the reservoir.

In an example, the fluid reservoir 26 is configured to store liquid and gaseous hydrogen.

In an example, the fluid reservoir 26 is configured to store cryogenic substances.

In an example, the fluid reservoir 26 is an integral part of the aircraft structure.

In an example, the at least one supply connection 24 is configured to be leak-tight under cryogenic conditions.

In an example, the at least one supply connection 24 is configured to be leak-tight with respect to hydrogen.

In an example, the primary and the secondary fluid consuming load 18 are integral parts of the fluid supply.

The "energy output" refers to the performance of the loads in providing energy from the fluid.

The term "energy output" relates to electrical, thermal or mechanical energy that can be transferred from the fluid consuming loads to the aircraft 12 to permit an action of the aircraft 12, as with the main energy output 28 for a flight operation mode of the aircraft 12 in Fig. 1.

In an example, the loads convert a first form of energy inherent to the fluid to a second form of energy that can be used to operate the aircraft 12.

The term "operation of the aircraft 12" relates to any process that changes the conditions and the status of the aircraft 12.

The term "flight operation mode" relates to a process that changes the conditions and the status of the aircraft 12 flying during a mission or starting to a new mission.

The term "independently operable from each other" relates to the primary fluid consuming load 16 and the secondary fluid consuming load 18 working self-sufficient without being dependent on the same fluid supply.

The term "state" can also be referred to as state of matter or aggregation state. It describes a physical condition of matter, e.g., the fluid fuel 20 being a liquid or a gas.

In an example, many different fuels, like hydrocarbons, can reside in two distinct aggregation states, when being stored in a fluid supply system 14.

In an example, the secondary fuel consuming load is configured to operate with the second state fuel 32 being a gas.

In an example, the primary fluid consuming load 16 is configured to receive the fluid.

In an example, the secondary fuel consuming load 18 is a secondary fuel cell and is configured to operate with hydrogen gas of the fluid supply system 14 in Fig.1. The primary fuel consuming load 16 is a primary fuel cell and configured to operate with both, liquid and gaseous hydrogen. Hence the primary fuel cell requires operating equipment to convert the liquid hydrogen to gaseous hydrogen to operate and provide energy. The secondary fuel cell does not require any operating equipment to convert the liquid hydrogen to gaseous hydrogen, and therefore is less complex and weighs less than the primary fuel cell.

In an example, the secondary fuel cell of Fig.1 exploits the fluid supply system 14 in converting liquid hydrogen to gaseous hydrogen and use it for providing energy. According to the invention, the second state fuel 32 results from a conversion 34 of the first state fuel 30 to the second state fuel 32 generating a pressure Δp, 36 in the fluid supply system 14. The fluid supply system 14 is configured to accumulate the second state fuel 32 in order to supply the secondary fluid consuming load 18. The secondary fluid consuming load 18 is configured to be supplied with the second state fuel 32 by the pressure Δp, 36 in the fluid supply system 14.

In an example, the fluid supply system 14 of Fig. 1 obtains sites that stem from the system itself or from manufacturing, which cause a conversion 34 of the first state fuel 30 to the second state fuel 32.

In an example, the temperature of the fluid supply system 14 converts the first state fuel 30 to the second state fuel 32.

In another example, the fluid supply system 14 has not well or non-insulated areas that cause conversion 34 of the first state fuel 30 to the second state fuel 32.

According to the invention, the fluid supply system 14 has large surfaces with imperfections that cause conversion 34 of the first state fuel 30 to the second state fuel 32.

In an example, the fluid supply system 14 is configured to collect or accumulate the second state fuel 32 in the fluid supply system 14 by the shape of the conduits 22 and/or the shape of the reservoir.

In an example, the connection between the fluid supply system 14 and the consuming loads is configured to collect or accumulate the second state fuel 32.

In an example, not shown in Fig. 1, the fluid supply system 14 possesses inner structures which guide the second state fuel 32 to the consuming loads.

In an example, the conversion 34 of the first state fuel 30 to the second state fuel 32 is a continuous process resulting in a rising pressure of the fluid supply system 14.

In an example, the fluid supply system 14 is configured to hold the pressure.

In an example, the secondary fluid consuming load 18 is configured to be continuously supplied with the second state fuel 32. The secondary fluid consuming load 18 is configured to generate energy from the second state fuel 32 continuously. The secondary fluid consuming load 18 is configured to provide an energy output for an operation of the aircraft 12 continuously. The secondary fuel consuming load 18 is configured to reduce the pressure Δp, 36 in the fluid supply system 14 by providing energy from the second state fuel 32 to the aircraft 12.

In an example, the primary fluid consuming load 16 is configured to provide energy while operating on the fluid depending on a continuous energy input provided secondary fluid consuming load 18. The primary fluid consuming load 16 and the at least one secondary fluid consuming load 18 are configured to complement each other in their energy outputs to cover the energy demand of the aircraft 12.

In an example, the pressure reduction in a fluid supply system 14 storing hydrogen as fluid fuel 20 of Fig. 1 is achieved by converting pressurized hydrogen to water by the secondary fluid consuming load 18. The water converts to a liquid or solid at the temperatures in, of or around the fluid supply system 14 and does not contribute to the pressure Δp, 36 in the fluid supply system 14 anymore.

In an example, not shown in Fig.1, fluid fuel 20 is leaking from the fluid supply system 14. The secondary fluid consuming load 18 is configured to be supplied with leaking fluid fuel 20.

In an example, while the secondary fluid consuming load 18 of Fig. 1 allows for pressure reduction in the fluid supply system 14, the fluid supply system 14 does not need to be designed for high pressures of the fluid fuel 20.

Further, measures to handle vented hydrogen or other forms of gaseous energy supply fluid can be minimized meaning advantages in terms of avoiding the need for complex, heavy, expensive and lifetime limited compensation systems or means.

In an example of Fig.1, the secondary fluid consuming load 18 is configured to provide a secondary energy range 38 for operating the aircraft 12 on ground. The primary fluid consuming load 16 is configured to provide a primary energy range 40 for operating the aircraft 12 during flight mission.

The secondary energy range 38 is also referred to as base energy range, standby energy range, idle energy range, ground energy range or ground operation energy range.

The primary energy range 40 is also referred to as mission energy range or flight energy range.

The ground operation comprises flight preparation phase, taxiing and post-flight operations.

In an example, the base energy range provided by the at least one secondary fuel consuming load is not sufficient for operating the aircraft 12.

In an example, the mission energy range covers peak levels of the energy demand of the aircraft 12 during the flight mission.

In an example, the primary fluid consuming load 16 is configured to consider the base energy range in its mission energy range.

In an example, the at least one secondary fuel consuming load is configured to provide a minimum energy range to the airplane operating on ground. The primary fluid consuming load 16 is configured to start providing energy when the at least one secondary fuel consuming load cannot cover the minimum energy range.

Fig. 2 schematically shows a more detailed view on the example of an energy supply arrangement 10 for an aircraft 12. In Fig. 2, the secondary fluid consuming load 18 is configured to be arranged at an arbitrary site 42 between the at least one supply connection 24 and the primary fluid consuming load 16 and/or the secondary fluid consuming load 18 is configured to be arranged at the at least one supply connection 24.

In an example, the arbitrary site 42 of Fig. 2 is configured to supply the at least one secondary fuel consuming load 18 with the second state fuel 32.

In an example, not shown in Fig. 2, a plurality of secondary fluid consuming loads is arranged at a plurality of arbitrary sites.

In an example, the plurality of arbitrary sites are sites, where the fluid supply system 14 is prone to convert first state fuel 30 to second state fuel 32.

In an example, the arbitrary site 42 is prone for conversion 34 of first state fuel 30 to second state fuel 32.

In an example, the at least one secondary fuel consuming load is configured to provide energy in the surroundings of the arbitrary site 42 of the fluid supply system 14.

In an example, the primary fluid consuming load 16 and the secondary fluid consuming load 18 are configured to be connectable to the at least one fluid reservoir 26. The primary fluid consuming load 16 is configured to be suppliable by the fluid reservoir 26 with the first state fuel 30 and the second state fuel 32. The at least one secondary fluid consuming load 18 is configured to be suppliable by the fluid reservoir 26 with the second state fuel 32.

In an example, the secondary fluid consuming load 18 is arranged at an upper portion of the fluid reservoir 26.

In an example, the arbitrary site 42 is at a location or facility of the aircraft 12, not shown in Fig. 2, having a local energy demand, like e.g., a cockpit, a lavatory, a galley, an air-conditioning system, or a cabin system.

Excessive venting is accepted locally and turned into a local benefit, by guiding it to a local fuel cell system to generate electrical power (valuable output).

As an effect, energy infrastructure is decentralized.

As an advantage, less energy infrastructure is required in the energy supply arrangement 10 of Fig. 2.

In an example of Fig. 2, the secondary fluid consuming load 18 comprises a venting valve 44 configured to relieve pressure above a threshold in the fluid supply system 14 and the secondary fluid consuming load 18 by ejecting an amount of the fluid to an outside (45) of the aircraft 12.

The term "venting valve 44" refers to a weak point of a unit that opens to the surroundings of the unit, when a certain pressure limit is achieved inside the unit and releases pressure to the surroundings of the unit, the outside (45) of the aircraft 12 in Fig. 2.

In an example, the secondary fluid consuming load 18 with the venting valve 44 is connected to the fluid reservoir 50. The fluid reservoir 50 stores the fuel. Rising pressure, Δp, 36 in Fig. 2, of the fuel in the fluid reservoir 50 would open the venting valve 44 to vent the pressurized fuel. The secondary fluid consuming load 18 consumes the pressurized fuel by its operation in providing energy. This leads to pressure reduction in the fluid reservoir 50 and prevents venting of the pressurized fuel.

In an example, the secondary fuel consuming load is configured to reduce an ejected amount of pressurized fluid.

As an effect, less chemical energy is released from the fluid supply system 14 of Fig. 2.

As an effect, no environmentally harmful fuel is vented into the environment, respectively the outside (45) of the aircraft 12 in Fig. 2.

As an effect, the "vented" fluid, e.g., hydrogen is not lost, and after being used for energy supply, leaves the aircraft 12 as water, which means a much easier handling overboard.

In an example of Fig. 2, the energy supply arrangement 10 further comprises a controlling unit 46. The primary fluid consuming load 16, the secondary fluid consuming load 18 and the fluid supply system 14 are configured to be connected to the controlling unit 46. In an option of Fig.2, the controlling unit 46 is configured to adjust the operation of the primary fluid consuming load 16 in dependency with the performance of the secondary fluid consuming load 18.

In an example, the controlling unit 46 is provided in Fig. 2, such that the operation of the primary fluid consuming load 16 can be adjusted to varying performances of the secondary fluid consuming load 18. The performance and the energy output of the secondary fluid consuming load 18 depends on the amount of the second state fuel 32 in the fluid supply system 14. The amount of second state fuel 32 in the fluid supply system 14 can vary over time of operating the aircraft 12 and hence does the energy output of the secondary fluid consuming load 18. The controlling unit 46 can compensate for this behavior by adjusting the operation mode of the primary load, i.e., by restricting the amount of hydrogen supplied to the primary fluid consuming load 16 or stopping the operation of the primary fluid consuming load 16.

In an example, the controlling unit 46 in Fig. 2 stops the supply of the first state fuel 30 to the primary fluid consuming load 16, while the energy provided by the secondary fluid consuming load 18 is sufficient for operating the aircraft 12.

As an advantage, a stream of first state fuel 30, e.g., hydrogen, to the primary fluid consuming load 16 in Fig. 2 can quickly and spontaneously be reduced by taking the hydrogen coming from the venting instead.

As an effect, conversion 34 of the first state fuel 30 to the second state fuel 32 at the large inner surface of the conduits 22 supplying the primary fluid consuming load 16 in Fig. 2 is reduced.

As an effect, the primary fluid consuming load 16 is relieved.

In an example of Fig. 2, the secondary fluid consuming load 18 is configured to extract thermal energy 48 from the fluid and to provide the thermal energy 48 to serve as for at least one of the group of operating equipment of the aircraft 12, service equipment of the aircraft 12 or a cabin space of the aircraft 12. The thermal energy 48 is provided for cooling and/or heating purposes.

In an example, an operating equipment is a functional entity of an aircraft 12 for operating an aircraft 12 during a mission, not shown in Fig. 2.

In an example, the at least one secondary fuel consuming load can be a fuel burner. The fuel burner can supply its heat, as thermal energy 48 in Fig. 2, to serve a heating purpose.

In an example, the fuel burner can be a hydrogen burner.

As an advantage, there could also be an implemented solution less complex than a fuel cell system e.g., just burning it locally to produce heat for the cabin space, not shown in Fig. 2.

As an advantage, the energy conversion (fuel cell or gas heater) serves the local cabin space for heating need and power supply or powers directly the tank systems components and controller.

As an advantage, local energy use even with low efficiency is beneficial for the energy efficiency of the energy supply arrangement 10.

In an example, a cold first state fuel 30 is conducted through a heat exchanger and the heat exchanger provides the cooling.

In an example, for the case of the primary fluid consuming load 16 being a local fuel cell system, thermal energy 48 is required to heat up the ~20K liquid hydrogen to its operating temperature. This thermal energy 48 is provided by secondary fluid consuming load 18 in Fig. 2.

In an example, the at least one secondary fuel consuming load is configured to actively remove residual second state fuel 32 from the fluid supply system 14 by operating and providing the energy output. The residual second state fuel 32 results from evacuating or refueling the fluid supply system 14, not shown in Fig. 2.

In an example, the fluid supply system 14 is refueled with the fluid fuel 20. The boiling point of the fluid fuel 20 is below room temperature. The temperature of the fluid supply system 14 converts the first state fuel 30 to the residual second state fuel 32. The secondary fluid consuming load 18 is used to operate with the residual second state fuel 32 during refueling to support the refueling process.

As an advantage, some other device can use the "vented" hydrogen in a useful way.

As an advantage, the electricity and heat produced in the local system, could be used, dependent on its value/magnitude to heat / power the fluid supply system 14, e.g. a lH2 tank system (partially or as needed).

In an example of Fig. 2, the energy supply arrangement 10 further comprises a fluid reservoir 50 configured to store the fluid fuel 20. Preferably, the fluid reservoir 50 is configured to store the fluid fuel 20 in the first state.

In an example, the fluid reservoir 50 of Fig. 2 is equipped with the secondary fluid consuming load 18 comprising a venting valve 44.

In an example, the fluid reservoir 50 is connected with the secondary fluid consuming load 18.

In an example, the at least one supply connection 24 is connected with the fluid reservoir 50.

In an example, the at least one supply connection 24 is an integrated part of the fluid reservoir 50.

As an advantage, the secondary fluid consuming load 18, e.g., a local fuel cell system actively can operate the fluid reservoir 50 actively when parked without the need for external power to be connected, as long as fluid fuel 20, e.g., hydrogen is in the fluid reservoir 50 that needs to be actively controlled.

As an advantage, the fluid supply system 14 that may have a need to survey the tank, as long as there is fluid fuel 20, e.g., hydrogen in it, could operate with the same hydrogen in the fluid reservoir 50, also as long as there is hydrogen in the fluid reservoir 50.

As an advantage, a constant flow of wanted and steered fluid fuel 20, e.g., hydrogen from the fluid reservoir 50 could be used to operate the secondary fluid consuming load 18, e.g. a local power conversion system, to stabilize the hydrogen in the fluid reservoir 50.

In an option, not shown in Fig. 2, the fluid supply system 14 is configured to provide hydrogen as the fluid fuel 20. The first state fuel 30 comprises hydrogen in a liquid phase. The second state fuel 32 comprises hydrogen in a gaseous phase. The fluid supply system 14 is configured to supply the hydrogen at least as second state fuel 32.

In an example of Fig. 2, the secondary fuel consuming load is a fuel cell 52.

In an option of Fig. 2, also the primary fluid consuming load 16 is a fuel cell.

In another option, the primary fluid consuming load 16 is a hydrogen combustion engine.

In a further option, the primary fluid consuming load 16 is a hydrogen burner.

In another option, the primary fluid consuming load 16 is a hydrogen turbine.

As an advantage, it is provided a so-to-speak recirculation form of "venting" hydrogen.

In an option, not shown in Fig. 2, an energy management system for the aircraft 12 is provided. The energy management system is configured to manage an energy output of the secondary fluid consuming load 18 and/ or the main energy output 28 of the primary fluid consuming load 16 in relation to necessary operations in a mission of the aircraft 12. In a further option, the energy management system is configured to focus the energy output and the main energy output 28 on the necessary operations.

In an example, the aircraft 12 takes off to a new mission. The energy management system is configured to focus the energy provided by both fluid consuming loads on necessary operations during take-off, i.e., from the cabin of the aircraft 12 to the driving units of the aircraft 12.

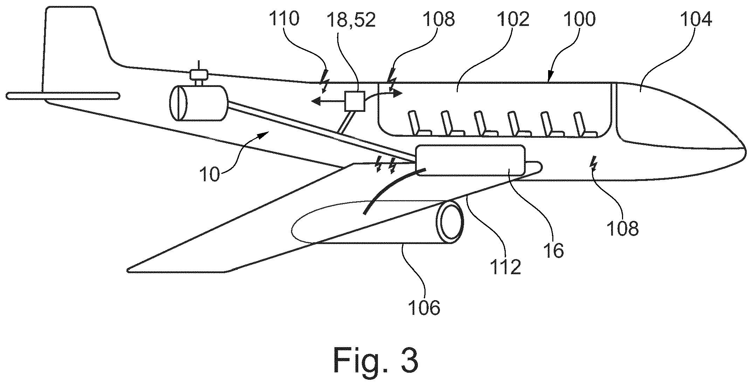

Fig. 3 schematically shows an example of an aircraft 100 comprising an example of the energy supply arrangement 10. The aircraft 100 comprises a cabin area 102, a cockpit arrangement 104, a propulsion system 106 and an example of the energy supply arrangement 10 according to one of the previous examples. The primary fluid consuming load 16 is configured to contribute to the propulsion system, and the secondary fluid consuming load 18 is configured to the energy supply 108 of at least one of the group of the cabin area 102 and the cockpit arrangement 104.

In an example, the primary fluid consuming load 16 is part of to the propulsion system.

In an example, the driving system can be a set of turbines and/or propellers.

As an advantage, the energy supply arrangement 10 of Fig. 3, e.g., the local power transformation, operates stable and still uses the venting hydrogen.

In an example of Fig. 3, the secondary fuel consuming load 18 of the energy supply arrangement 10 is configured to provide energy 110 for operating the aircraft 100 on ground. In an option, the primary fluid consuming load 16 of the energy supply arrangement 10 is configured to provide energy 112 for operating the aircraft 100 on a flight mission.

As an advantage, the fluid supply system 14 of a fueled and parked aircraft 100 does not loose energy by venting of the fluid supply system 14.

As a further advantage, the local fuel cell system powers and cools the cabin with the lH2 in parked aircrafts 100 and maintenance situations without other systems (as the propulsion system 106) having to be activated.

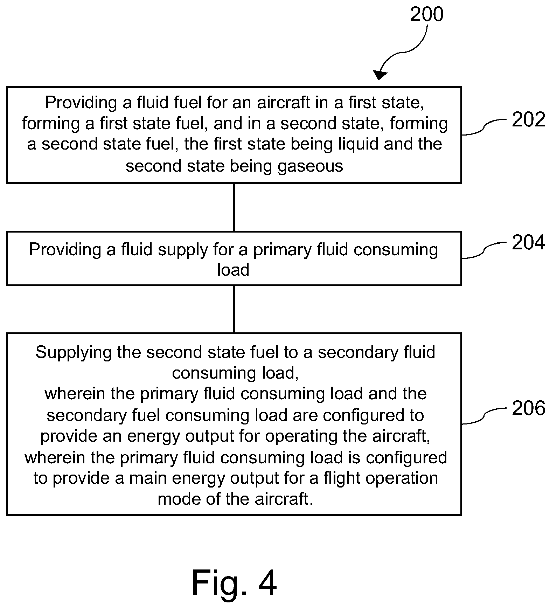

Fig. 4 shows basic steps of an example of a method 200 for supplying energy to an aircraft 100. The method 200 comprises the following steps:
- In a first step 202, a fluid fuel 20 for an aircraft 100 in a first state, forming a first state fuel 30, and in a second state, forming a second state fuel 32, the first state being liquid and the second state being gaseous are provided.
- In a second step 204, a fluid supply for a primary fluid consuming load 16 is provided.
- In a third step 206, the second state fuel 32 is supplied to a secondary fluid consuming load 18. The primary fluid consuming load 16 and the secondary fuel consuming load are configured to provide an energy output for operating the aircraft 100. The primary fluid consuming load 16 is configured to provide a main energy output 28 for a flight operation mode of the aircraft 100.

In an example, a computer program or program element for controlling an apparatus according to one of the examples above is provided, which program or program element, when being executed by a processing unit, is adapted to perform the method steps of one of the method examples above.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit or be distributed over more than one computer units, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors.

As discussed above, the processing unit, for instance a controller implements the control method. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

This exemplary embodiment of the invention covers both, a computer program that right from the beginning uses the invention and a computer program that by means of an update turns an existing program into a program that uses the invention.

Further on, the computer program element might be able to provide all necessary steps to fulfil the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section. A computer program may be stored and/or distributed on a suitable medium, such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art, insofar as they fall within the scope of the claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An energy supply arrangement (10) for an aircraft (12), comprising:
- a fluid supply system (14);
- a primary fluid consuming load (16); and
- a secondary fluid consuming load (18);
wherein the fluid supply system is configured to provide a fluid fuel (20) to the primary fluid consuming load and the secondary fluid consuming load;
wherein the fluid supply system comprises conduits (22) and at least one supply connection (24) configured for connecting to a fluid reservoir (26) storing a fluid supply, wherein the conduits are connecting the at least one supply connection with the primary fluid consuming load and the secondary fluid consuming load;
wherein the primary fluid consuming load and the secondary fuel consuming load are configured to provide an energy output for operating the aircraft, wherein the primary fluid consuming load is configured to provide a main energy output (28) for a flight operation mode of the aircraft;
wherein the primary fluid consuming load and the secondary fluid consuming load are configured to be independently operable from each other;
wherein the fluid fuel is present in a first state, forming a first state fuel (30), and in a second state, forming a second state fuel (32), the first state being liquid and the second state being gaseous; and
wherein the secondary fuel consuming load is configured to operate with the second state fuel
wherein the second state fuel results from a conversion (34) of the first state fuel to the second state fuel generating a pressure (Δp, 36) in the fluid supply system;
wherein the fluid supply system is configured to accumulate the second state fuel in order to supply the secondary fluid consuming load;
wherein the secondary fluid consuming load is configured to be supplied with the second state fuel by the pressure in the fluid supply system; and
wherein the conversion (34) of the first state fuel (30) to the second state fuel (32) is caused by large surfaces with imperfections of the fluid supply system (14), including the large inner surface of the conduits (22) supplying the primary fluid consuming load (16).

2. Energy supply arrangement (10) according to claim 1, wherein the secondary fluid consuming load is configured to provide a secondary energy range (38) for operating the aircraft on ground; and
wherein the primary fluid consuming load is configured to provide a primary energy range (40) for operating the aircraft during flight mission.

3. Energy supply arrangement (10) according to claim 1 or 2, wherein the secondary fluid consuming load is configured to be arranged at an arbitrary site (42) between the at least one supply connection and the primary fluid consuming load; and/or
wherein the secondary fluid consuming load is configured to be arranged at the at least one supply connection (24).

4. Energy supply arrangement (10) according to claim 1, 2 or 3, wherein the secondary fluid consuming load comprises a venting valve (44) configured to relieve pressure above a threshold in the fluid supply system and the secondary fluid consuming load by ejecting an amount of the fluid to an outside (45) of the aircraft.

5. Energy supply arrangement (10) according to one of the preceding claims, wherein the energy supply arrangement further comprises a controlling unit (46);
wherein the primary fluid consuming load, the secondary fluid consuming load and the fluid supply system are configured to be connected to the controlling unit; and
wherein the controlling unit is configured to adjust the operation of the primary fluid consuming load in dependency with the performance of the secondary fluid consuming load.

6. Energy supply arrangement (10) according to one of the preceding claims, wherein the secondary fluid consuming load is configured to extract thermal energy (48) from the fluid and to provide the thermal energy to serve as for at least one of the group of operating equipment of the aircraft, service equipment of the aircraft or a cabin space of the aircraft; and
wherein the thermal energy is provided for cooling and/or heating purposes.

7. Energy supply arrangement (10) according to one of the preceding claims, further comprising a fluid reservoir (50) configured to store the fluid fuel; and
wherein the fluid reservoir is configured to store the fluid fuel in the first state.

8. Energy supply arrangement (10) according to one of the preceding claims, wherein the fluid supply system is configured to provide hydrogen as the fluid fuel;
wherein the first state fuel comprises hydrogen in a liquid phase;
wherein the second state fuel comprises hydrogen in a gaseous phase; and
wherein the fluid supply system is configured to supply the hydrogen at least as second state fuel.

9. Energy supply arrangement (10) according to one of the preceding claims, wherein the secondary fuel consuming load is a fuel cell (52).

10. An aircraft (100), comprising:
- a cabin area (102);
- a cockpit arrangement (104);
- a propulsion system (106); and
- an energy supply arrangement according (10) to one of the claims 1 to 9,
wherein the primary fluid consuming load (16) is configured to contribute to the propulsion system and the secondary fluid consuming load is configured to the energy supply (108) of at least one of the group of the cabin area and the cockpit arrangement.

11. Aircraft according to claim 10, wherein the secondary fuel consuming load of the energy supply arrangement is configured to provide energy (110) for operating the aircraft on ground; and
wherein the primary fluid consuming load of the energy supply arrangement is configured to provide energy (112) for operating the aircraft on a flight mission.

12. A method (200) for supplying energy to an aircraft, comprising the following steps:
- Providing (202) a fluid fuel for an aircraft in a first state, forming a first state fuel, and in a second state, forming a second state fuel, the first state being liquid and the second state being gaseous;
- Providing (204) a fluid supply for a primary fluid consuming load; and
- Supplying (206) the second state fuel to a secondary fluid consuming load;
wherein the primary fluid consuming load and the secondary fuel consuming load are configured to provide an energy output for operating the aircraft, wherein the primary fluid consuming load is configured to provide a main energy output for a flight operation mode of the aircraft wherein the second state fuel results from a conversion of the first state fuel to the second state fuel generating a pressure in the fluid supply system, wherein the fluid supply system is configured to accumulate the second state fuel in order to supply the secondary fluid consuming load, wherein the secondary fluid consuming load is configured to be supplied with the second state fuel by the pressure in the fluid supply system, wherein the conversion of the first state fuel to the second state fuel is caused by large surfaces with imperfections of the fluid supply system, including the large inner surface of the conduits supplying the primary fluid consuming load.

## Patentansprüche

1. Eine Energieversorgungsanordnung (10) für ein Flugzeug (12), umfassend:
- ein Fluidversorgungssystem (14);
- eine primäre Fluidverbrauchslast (16); und
- eine sekundäre Fluidverbrauchslast (18);
wobei das Fluidversorgungssystem so konfiguriert ist, dass es der primären Fluidverbrauchslast und der sekundären Fluidverbrauchslast ein Fluidtreibstoff (20) zuführt;
wobei das Fluidversorgungssystem Leitungen (22) und mindestens einen Versorgungsanschluss (24) umfasst, der zum Anschluss an einen Fluidbehälter (26) konfiguriert ist, der einen Fluidvorrat speichert, wobei die Leitungen den mindestens einen Versorgungsanschluss mit der primären Fluidverbrauchslast und der sekundären Fluidverbrauchslast verbinden;
wobei die primäre Fluidverbrauchslast und die sekundäre Fluidverbrauchslast so konfiguriert sind, dass sie eine Energieabgabe zum Betreiben des Flugzeugs bereitstellen, wobei die primäre Fluidverbrauchslast so konfiguriert ist, dass sie eine Hauptenergieabgabe (28) für einen Flugbetriebsmodus des Flugzeugs bereitstellt;
wobei die primäre Fluidverbrauchslast und die sekundäre Fluidverbrauchslast so konfiguriert sind, dass sie unabhängig voneinander betrieben werden können;
wobei der Fluidtreibstoff in einem ersten Zustand vorliegt und einen Treibstoff im ersten Zustand (30) bildet, und in einem zweiten Zustand vorliegt und einen Treibstoff im zweiten Zustand (32) bildet, wobei der erste Zustand flüssig und der zweite Zustand gasförmig ist; und
wobei die sekundäre Treibstoffverbrauchsbelastung so konfiguriert ist, dass sie mit dem Treibstoff im zweiten Zustand arbeitet;
wobei der Treibstoff im zweiten Zustand aus einer Umwandlung (34) des Treibstoffs im ersten Zustand in den Treibstoff im zweiten Zustand resultiert, wodurch ein Druck (Δ p, 36) im Fluidversorgungssystem erzeugt wird;
wobei das Fluidversorgungssystem so konfiguriert ist, dass es den Treibstoff im zweiten Zustand akkumuliert, um die sekundäre Fluidverbrauchslast zu versorgen;
wobei die sekundäre Fluidverbrauchslast so konfiguriert ist, dass sie durch den Druck im Fluidversorgungssystem mit dem Treibstoff im zweiten Zustand versorgt wird; und
wobei die Umwandlung (34) des Treibstoffs im ersten Zustand (30) in den Treibstoff im zweiten Zustand (32) durch große Oberflächen mit Unvollkommenheiten des Fluidversorgungssystems (14) verursacht wird, einschließlich der großen Innenfläche der Leitungen (22), die die primäre Fluidverbrauchslast (16) versorgen.

2. Energieversorgungsanordnung (10) nach Anspruch 1, wobei die sekundäre Fluidverbrauchslast so konfiguriert ist, dass sie einen sekundären Energiebereich (38) für den Betrieb des Flugzeugs am Boden bereitstellt; und
wobei die primäre Fluidverbrauchslast so konfiguriert ist, dass sie einen primären Energiebereich (40) für den Betrieb des Flugzeugs während des Fluges bereitstellt.

3. Energieversorgungsanordnung (10) gemäß Anspruch 1 oder 2, wobei die sekundäre Fluidverbrauchslast so konfiguriert ist, dass sie an einer beliebigen Stelle (42) zwischen dem mindestens einen Versorgungsanschluss und der primären Fluidverbrauchslast angeordnet werden kann; und/oder
wobei die sekundäre Fluidverbrauchslast so konfiguriert ist, dass sie an dem mindestens einen Versorgungsanschluss (24) angeordnet werden kann.

4. Energieversorgungsanordnung (10) gemäß Anspruch 1, 2 oder 3, wobei die sekundäre Fluidverbrauchslast ein Entlüftungsventil (44) umfasst, das so konfiguriert ist, dass es Druck oberhalb eines Schwellenwerts im Fluidversorgungssystem und in der sekundären Fluidverbrauchslast durch Ausstoßen einer Menge des Fluids nach außen (45) aus dem Flugzeug ablässt.

5. Energieversorgungsanordnung (10) nach einem der vorstehenden Ansprüche, wobei die Energieversorgungsanordnung ferner eine Steuereinheit (46) umfasst;
wobei die primäre Fluidverbrauchslast, die sekundäre Fluidverbrauchslast und das Fluidversorgungssystem so konfiguriert sind, dass sie mit der Steuereinheit verbunden sind; und
wobei die Steuereinheit so konfiguriert ist, dass sie den Betrieb der primären Fluidverbrauchslast in Abhängigkeit von der Leistung der sekundären Fluidverbrauchslast anpasst.

6. Energieversorgungsanordnung (10) gemäß einem der vorstehenden Ansprüche, wobei die sekundäre Fluidverbrauchslast so konfiguriert ist, dass sie thermische Energie (48) aus dem Fluid extrahiert und die thermische Energie bereitstellt, um mindestens einer der Gruppe aus Betriebsausrüstung des Flugzeugs, Serviceausrüstung des Flugzeugs oder einem Kabinenraum des Flugzeugs zu dienen; und
wobei die thermische Energie zu Kühl- und/oder Heizzwecken bereitgestellt wird.

7. Energieversorgungsanordnung (10) nach einem der vorstehenden Ansprüche, die ferner einen Fluidbehälter (50) umfasst, der so konfiguriert ist, dass er den Fluidtreibstoff speichert; und
wobei der Fluidbehälter so konfiguriert ist, dass er den Fluidtreibstoff im ersten Zustand speichert.

8. Energieversorgungsanordnung (10) nach einem der vorstehenden Ansprüche, wobei das Fluidversorgungssystem so konfiguriert ist, dass es Wasserstoff als Fluidtreibstoff bereitstellt;
wobei der Treibstoff im ersten Zustand Wasserstoff in flüssiger Phase umfasst;
wobei der Treibstoff im zweiten Zustand Wasserstoff in gasförmigem Zustand umfasst; und
wobei das Fluidversorgungssystem so konfiguriert ist, dass es den Wasserstoff zumindest als Treibstoff im zweiten Zustand zuführt.

9. Energieversorgungsanordnung (10) gemäß einem der vorstehenden Ansprüche, wobei die sekundäre Treibstoffverbrauchende Last eine Brennstoffzelle (52) ist.

10. Flugzeug (100), umfassend:
- einen Kabinenbereich (102);
- eine Cockpit-Anordnung (104);
- ein Antriebssystem (106); und
- eine Energieversorgungsanordnung gemäß (10) einem der Ansprüche 1 bis 9,
wobei die primäre Fluidverbrauchslast (16) so konfiguriert ist, dass sie zum Antriebssystem beiträgt, und die sekundäre Fluidverbrauchslast so konfiguriert ist, dass sie zur Energieversorgung (108) mindestens eines der Elemente Kabinenbereich und Cockpit-Anordnung beiträgt.

11. Flugzeug gemäß Anspruch 10, wobei die sekundäre Treibstoffverbrauchsbelastung der Energieversorgungsanordnung so konfiguriert ist, dass sie Energie (110) für den Betrieb des Flugzeugs am Boden bereitstellt; und
wobei die primäre Fluidverbrauchslast der Energieversorgungsanordnung so konfiguriert ist, dass sie Energie (112) für den Betrieb des Flugzeugs auf einer Flugmission bereitstellt.

12. Verfahren (200) zur Energieversorgung eines Flugzeugs, das die folgenden Schritte umfasst:
- Bereitstellen (202) eines Fluidtreibstoffs für ein Flugzeug in einem ersten Zustand, der einen Treibstoff im ersten Zustand bildet, und in einem zweiten Zustand, der einen Treibstoff im zweiten Zustand bildet, wobei der erste Zustand flüssig und der zweite Zustand gasförmig ist;
- Bereitstellen (204) einer Fluidversorgung für eine primäre Fluidverbrauchslast; und
- Zuführen (206) des Treibstoffs im zweiten Zustand zu einer sekundären fluidverzehrenden Last;
wobei die primäre Fluidverbrauchslast und die sekundäre Fluidverbrauchslast so konfiguriert sind, dass sie eine Energieabgabe für den Betrieb des Flugzeugs bereitstellen, wobei die primäre Fluidverbrauchslast so konfiguriert ist, dass sie eine Hauptenergieabgabe für einen Flugbetriebsmodus des Flugzeugs bereitstellt, wobei der Treibstoff im zweiten Zustand aus einer Umwandlung des Treibstoffs im ersten Zustand in den Treibstoff im zweiten Zustand resultiert, wodurch ein Druck im Fluidversorgungssystem erzeugt wird, wobei das Fluidversorgungssystem so konfiguriert ist, dass es den Treibstoff im zweiten Zustand akkumuliert, um die sekundäre Fluidverbrauchslast zu versorgen, wobei die sekundäre Fluidverbrauchslast so konfiguriert ist, dass sie durch den Druck im Fluidversorgungssystem mit dem Treibstoff im zweiten Zustand versorgt wird, wobei die Umwandlung des Treibstoffs im ersten Zustand in den Treibstoff im zweiten Zustand durch große Oberflächen mit Unvollkommenheiten des Fluidversorgungssystems verursacht wird, einschließlich der großen Innenfläche der Leitungen, die die primäre Fluidverbrauchslast versorgen.

## Revendications

1. Un dispositif d'alimentation en énergie (10) pour un aéronef (12), comprenant:
- un système d'alimentation en fluide (14) ;
- une charge consommant du fluide primaire (16) ; et
- une charge consommant du fluide secondaire (18) ;
dans lequel le système d'alimentation en fluide est configuré pour fournir un fluide combustible (20) à la charge consommant du fluide primaire et à la charge consommant du fluide secondaire ;
dans lequel le système d'alimentation en fluide comprend des conduits (22) et au moins un raccord d'alimentation (24) configuré pour se connecter à un réservoir de fluide (26) stockant une alimentation en fluide, dans lequel les conduits relient le au moins un raccord d'alimentation à la charge consommant du fluide primaire et à la charge consommant du fluide secondaire ;
dans lequel la charge consommant du fluide primaire et la charge consommant du combustible secondaire sont configurées pour fournir une sortie d'énergie pour faire fonctionner l'aéronef, dans lequel la charge consommant du fluide primaire est configurée pour fournir une sortie d'énergie principale (28) pour un mode de fonctionnement en vol de l'aéronef;
dans lequel la charge consommant du fluide primaire et la charge consommant du fluide secondaire sont configurées pour fonctionner indépendamment l'une de l'autre ;
dans lequel le fluide combustible est présent dans un premier état, formant un combustible à premier état (30), et dans un second état, formant un combustible à second état (32), le premier état étant liquide et le second état étant gazeux ; et
dans lequel la charge consommant du combustible secondaire est configurée pour fonctionner avec le combustible à l'état secondaire
dans lequel le combustible à l'état secondaire résulte d'une conversion (34) du combustible à l'état primaire en combustible à l'état secondaire générant une pression (Δ p, 36) dans le système d'alimentation en fluide ;
dans lequel le système d'alimentation en fluide est configuré pour accumuler le combustible à deuxième état afin d'alimenter la charge consommant du fluide secondaire ;
dans lequel la charge consommant du fluide secondaire est configurée pour être alimentée en combustible à l'état secondaire par la pression dans le système d'alimentation en fluide ; et
dans lequel la conversion (34) du combustible à premier état (30) en combustible à second état (32) est provoquée par de grandes surfaces présentant des imperfections du système d'alimentation en fluide (14), y compris la grande surface intérieure des conduits (22) alimentant la charge consommant du fluide primaire (16).

2. Dispositif d'alimentation en énergie (10) selon la revendication 1, dans lequel la charge consommant du fluide secondaire est configurée pour fournir une plage d'énergie secondaire (38) pour faire fonctionner l'aéronef au sol ; et
dans lequel la charge consommant du fluide primaire est configurée pour fournir une plage d'énergie primaire (40) pour faire fonctionner l'aéronef pendant la mission de vol.

3. Dispositif d'alimentation en énergie (10) selon la revendication 1 ou 2, dans lequel la charge consommant du fluide secondaire est configurée pour être disposée à un emplacement arbitraire (42) entre au moins une raccord d'alimentation et la charge consommant du fluide primaire ; et/ou
dans lequel la charge consommant du fluide secondaire est configurée pour être disposée au niveau de la au moins une raccord d'alimentation (24).

4. Dispositif d'alimentation en énergie (10) selon la revendication 1, 2 ou 3, dans lequel la charge consommant du fluide secondaire comprend une soupape de purge (44) configurée pour relâcher la pression au-dessus d'un seuil dans le système d'alimentation en fluide et la charge consommant du fluide secondaire en éjectant une quantité du fluide à l'extérieur (45) de l'aéronef.

5. Dispositif d'alimentation en énergie (10) selon l'une des revendications précédentes, dans lequel le dispositif d'alimentation en énergie comprend en outre une unité de commande (46) ;
dans lequel la charge consommant du fluide primaire, la charge consommant du fluide secondaire et le système d'alimentation en fluide sont configurés pour être connectés à l'unité de commande ; et
dans lequel l'unité de commande est configurée pour ajuster le fonctionnement de la charge consommant du fluide primaire en fonction des performances de la charge consommant du fluide secondaire.

6. Dispositif d'alimentation en énergie (10) selon l'une des revendications précédentes, dans lequel la charge consommant du fluide secondaire est configurée pour extraire l'énergie thermique (48) du fluide et pour fournir l'énergie thermique afin de servir au moins l'un des équipements de fonctionnement de l'aéronef, des équipements de service de l'aéronef ou un espace de cabine de l'aéronef ; et
dans lequel l'énergie thermique est fournie à des fins de refroidissement et/ou de chauffage.

7. Dispositif d'alimentation en énergie (10) selon l'une des revendications précédentes, comprenant en outre un réservoir de fluide (50) configuré pour stocker le fluide combustible ; et
dans lequel le réservoir de fluide est configuré pour stocker le fluide combustible dans le premier état.

8. Dispositif d'alimentation en énergie (10) selon l'une des revendications précédentes, dans lequel le système d'alimentation en fluide est configuré pour fournir de l'hydrogène comme fluide combustible ;
dans lequel le combustible à l'état premier comprend de l'hydrogène en phase liquide ;
dans lequel le combustible à l'état second comprend de l'hydrogène à l'état gazeux ; et
dans lequel le système d'alimentation en fluide est configuré pour alimenter l'hydrogène au moins en tant que combustible dans le deuxième état.

9. Dispositif d'alimentation en énergie (10) selon l'une des revendications précédentes, dans lequel la charge consommant le combustible secondaire est une pile à combustible (52).

10. Aéronef (100), comprenant :
- une zone cabine (102) ;
- un agencement de cockpit (104) ;
- un système de propulsion (106) ; et
- un dispositif d'alimentation en énergie selon (10) l'une des revendications 1 à 9,
dans lequel la charge consommant du fluide primaire (16) est configurée pour contribuer au système de propulsion et la charge consommant du fluide secondaire est configurée pour l'alimentation en énergie (108) d'au moins un élément parmi le groupe comprenant la zone de la cabine et l'agencement du cockpit.

11. Aéronef selon la revendication 10, dans lequel la charge consommant le combustible secondaire du dispositif d'alimentation en énergie est configurée pour fournir de l'énergie (110) pour faire fonctionner l'aéronef au sol ; et
dans lequel la charge consommant du fluide primaire du dispositif d'alimentation en énergie est configurée pour fournir de l'énergie (112) pour faire fonctionner l'aéronef lors d'une mission de vol.

12. Procédé (200) pour fournir de l'énergie à un aéronef, comprenant les étapes suivantes :
- Fournir (202) un fluide combustible pour un aéronef dans un premier état, formant un combustible de premier état, et dans un second état, formant un combustible de second état, le premier état étant liquide et le second état étant gazeux ;
- Fournir (204) une alimentation en fluide pour une charge consommant du fluide primaire; et
- Fournir (206) le combustible à deuxième état à une charge consommant du fluide secondaire ;
dans lequel la charge consommant du fluide primaire et la charge consommant du combustible secondaire sont configurées pour fournir une puissance énergétique pour faire fonctionner l'aéronef, dans lequel la charge consommant du fluide primaire est configurée pour fournir une puissance énergétique principale pour un mode de fonctionnement en vol de l'aéronef, dans lequel le combustible à deuxième état résulte d'une conversion du combustible à premier état en combustible à deuxième état générant une pression dans le système d'alimentation en fluide, dans lequel le système d'alimentation en fluide est configuré pour accumuler le combustible à deuxième état afin d'alimenter la charge consommant du fluide secondaire, dans lequel la charge consommant du fluide secondaire est configurée pour être alimentée en combustible à deuxième état par la pression dans le système d'alimentation en fluide, dans lequel la conversion du combustible à premier état en combustible à deuxième état est provoquée par de grandes surfaces présentant des imperfections du système d'alimentation en fluide, y compris la grande surface intérieure des conduits alimentant la charge consommant du fluide primaire.
